# EUROPEAN PATENT APPLICATION

(11) **EP 1 156 080 A1**
(43) Date of publication of application: **21.11.2001**
(21) Application number: 00401321.5
(22) Date of filing: 15.05.2000
(51) Int. Cl.: C08L 77/00, B32B 27/34, B29C 33/68

(54) **Coextruded film comprising two outer polyamide or polyamide/polyolefin alloy layers and a central polyolefin or polyamide or polyamide/polyolefin alloy layer**

(71) Applicant: Atofina, 92800 Puteaux (FR); P.T. Sido Bangun, Singosari 65153, East Java (ID)
(72) Inventor: Grimaud, Thomas, 27300 Bernay (FR); Foong-Chen-Shiong, Danny, Dover parview Tower A Singapore 138 684 (SG); Tan, Tien Tjiu, Lawang 65211 East Java (ID)
(74) Representative: Neel, Henry

(57) **Abstract**

The invention relates to a film comprising:
(i) at least one central polyolefin or polyamide or polyamide/polyolefin alloy layer and
(ii) at least two outer polyamide or polyamide/polyolefin alloy layers having a surface tension of less than 34 mJ/m² for one of the faces, advantageously between 10 and 31 mJ/m², and a surface tension of greater than 36 mJ/m² for the other face, advantageously from 40 to 65 mJ/m².

The invention also relates to covers consisting of the above film, the low surface tension face being disposed on the inside.

The invention also relates to SMC sandwich structures consisting of a crosslinkable unsaturated polyester disposed between two films as above, the low surface tension face of these films being disposed on the polyester side.

The present invention also relates to the use of the above films for refinishing the protective system of autoclaves.

The present invention also relates to the use of the above films for extruding PMMA sheets.

## Description

### [Field of the Invention]

The present invention relates to a film comprising a central polyolefin or polyamide or polyamide/polyolefin alloy layer and two outer polyamide or polyamide/polyolefin alloy layers. More particularly, one of the outer layers has a low surface tension and the other has a high surface tension.

By way of example, the low surface tension is at most that of the polyolefin of the alloy, because it has cocontinuous phases and/or because it contains additives. By way of example, the high surface tension is at least that of the polyamide of the alloy, because it has a polyamide matrix and/or because it contains additives and/or because it has been surface treated. These films are useful for making covers for protecting cars (autobags) subjected to paint refinish operations, and also for making sandwich structures in SMC technology.

Car paint refinishes sometimes require the use of protective films (sometimes referred to as masking films) around the refinish area in order to avoid painting areas which are not being refinished. Following application, the refinish paints are generally treated at temperatures which vary depending on the nature of the paint. Once this operation is finished, the protective film is removed. The film must not stick on its body-side face or leave marks on the painted body. The low surface tension layer is on the body side. Moreover, the refinish paint must not run onto the other face of the film (that is, the face opposite the body), which would give rise to defects outside the application area. Finally, the film must withstand heat treatment and is required to be resistant to the solvents and other chemicals present in the paint formulations. In certain cases, the treatment temperatures of refinish paints may reach from 170 to 180°C. Users of refinish films generally use films cut to dimensions corresponding to dimensions of the car; often, these films are welded in order to make protective covers adapted to different vehicles. These car protection covers may be used by equipment suppliers, garages and private individuals.

SMC is used in the manufacture of converted articles not only in the automotive field (bumpers, tailgates, etc) but also in the marine (boat hulls) or electronics (casings) fields. SMC is generally composed of a crosslinkable polymeric resin, in particular an unsaturated polyester, reinforcing fillers such as glass fibres, and various other additives in minor quantities. The SMC is ordinarily prepared by laying fibres on a layer of unsaturated polyester resin, which is itself supported on a moveable film, composed in general of polyethylene or of polyamide. Another film of the same kind is subsequently laid over the resin/reinforcing filler system in order to form a sandwich structure between two films. It is the low surface tension layer which is on the polyester side. The sandwich subsequently passes through a series of kneading and compacting rollers and is generally wound up in the form of large rolls. It is then stored before subsequent forming. During the storage period, the polyester resin undergoes partial crosslinking, which brings about an increase in the viscosity of the SMC, until it attains a consistency making it suitable for moulding. SMC users, generally moulders, cut an appropriately sized section from the roll, remove the support film by peeling and place the SMC in a heated mould for simultaneous forming and full cure. Thus composite compounds in the form of an SMC sandwich find ready application in compression moulding procedures.

### [Prior Art and Technical Problem]

The prior art has not described such films, nor has it described their application for paint refinishes or for SMC.

EP-A-0506515 describes films based on a polyamide/polyolefin alloy in which the compatibilizer is a functionalized polyolefin (for example, a maleinized polyolefin), optionally grafted with a low molecular weight polyamide oligomer. These films are used for SMC (Sheet Moulding Compound); they have a surface tension of approximately 32 mN/m. Although the film involved is a monolayer film, a certain thickness is required in order to attain good mechanical properties, which implies a fairly high cost for the final film.

EP-A-0786319 describes films which are used for SMC, consisting of a polyamide/polyolefin alloy layer disposed between two polyolefin layers.

Three properties relating to film for car paint refinishes are important. The first relates to the surface tension of the layer in contact with the body. This surface tension must be less than, or at most equal to, that of a polyolefin (s = 31 - 32 mJ/m²), or even somewhat lower in certain cases (s = 14 mJ/m²), in order to avoid any marking or sticking of the film subsequent to the heat treatment whose purpose is to crosslink the refinish paint. The second property concerns the thermal behaviour of the film during the abovementioned treatment (170 - 180°C for 20 - 30' for the most common types of refinish paint, i.e. polyurethane acrylics). The third property is in relation to the surface tension of the outer layer (the layer opposite the layer in contact with the body), which is contact with the refinish paint and protects the body outside the refinish area. This surface tension must be greater than or equal to that of the polylamide (s = 36 - 38 mJ/m²), or even somewhat greater in certain cases (S = 40 - 70 mJ/m²), in order in particular to prevent the refinish paint from running outside the refinish area. Finally, it is also necessary for the film to exhibit effective weldability on its inner face (fabrication of the covers to the dimensions of vehicles), chemical resistance to various paint solvents, and mechanical properties which allow the bags to be handled under bodyshop conditions.

In the case where this type of film is used for peelable SMC backings it is necessary for this film to possess very low styrene permeability, in order to avoid the loss of monomeric styrene, which acts as the reactive diluent in SMC.

### [Brief Description of the Invention]

Thus, the invention relates to a film comprising:
(i) at least one central polyolefin or polyamide or polyamide/polyolefin alloy layer and
(ii) at least two outer polyamide or polyamide/polyolefin alloy layers having a surface tension of less than 34 mJ/m² for one of the faces, advantageously between 10 and 31 mJ/m², and a surface tension of greater than 36 mJ/m² for the other face, advantageously from 40 to 65 mJ/m².

The invention also relates to covers consisting of the above film, the low surface tension face being disposed on the inside.

The invention also relates to SMC sandwich structures consisting of a crosslinkable unsaturated polyester disposed between two films as above, the low surface tension face of these films being disposed on the polyester side.

The present invention also relates to the use of the above films for refinishing the protective system of autoclaves.

The present invention also relates to the use of the above films for extruding PMMA sheets.

### [Detailed Description of the Invention]

First of all, the polyamides and the polyolefins of the polyamide/polyolefin alloys of both the central layer and the outer layers will be described, and then the specific features of each layer will be described. In the remainder of the text, the term "polyamide/polyolefin blend" will usually be used instead of "polyamide/polyolefin alloy". For simplification, the polyamide is designated (A) and the polyolefin is designated (B).

**As far as the polyamide (A) is concerned, the term polyamide refers to** the condensation products:
- of one or more amino acids, such as aminocaproic, 7-aminoheptanoic, 11-aminoundecanoic and 12-aminododecanoic acid, or of one or more lactams such as caprolactam, oenantholactam and lauryllactam;
- of one or more salts or mixtures of diamines such as hexamethylenediamine, dodecamethylenediamine, meta-xylylenediamine, bis(p-aminocyclohexyl)methane and trimethylhexamethylenediamine with diacids such as isophthalic, terephthalic, adipic, azelaic, suberic, sebacic and dodecanedicarboxylic acid.

Examples of polyamides that may be mentioned include PA 6 and PA 6-6.

It is also possible to make advantageous use of copolyamides. Mention may be made of the copolyamides resulting from the condensation of at least two alpha,omega-amino carboxylic acids or of two lactams or of one lactam and one alpha,omega-amino carboxylic acid. Mention may also be made of the copolyamides resulting from the condensation of at least one alpha,omega-amino carboxylic acid (or one lactam), at least one diamine and at least one dicarboxylic acid.

Examples of lactams which may be mentioned include those having 3 to 12 carbon atoms on the main ring, which lactams may be substituted. Mention may be made, for example, of β,β-dimethylpropiolactam, α,α-dimethylpropiolactam, amylolactam, caprolactam, capryllactam and lauryllactam.

Examples of alpha,omega-amino carboxylic acids that may be mentioned include aminoundecanoic acid and aminododecanoic acid. Examples of dicarboxylic acids that may be mentioned include adipic acid, sebacic acid, isophthalic acid, butanedioic acid, 1,4-cyclohexanedicarboxylic acid, terephthalic acid, the sodium or lithium salt of sulphoisophthalic acid, dimerized fatty acids (these dimerized fatty acids having a dimer content of at least 98% and preferably being hydrogenated) and dodecanedioic acid, HOOC-(CH₂)₁₀-COOH.

The diamine can be an aliphatic diamine having 6 to 12 carbon atoms; it may be of aryl and/or saturated cyclic type. Examples that may be mentioned include hexamethylenediamine, piperazine, tetramethylenediamine, octamethylenediamine, decamethylenediamine, dodecamethylenediamine, 1,5-diaminohexane, 2,2,4-trimethyl-1, 6-diaminohexane, diamine polyols, isophoronediamine (IPD), methylpentamethylenediamine (MPDM), bis(aminocyclohexyl)methane (BACM) and bis(3-methyl-4-aminocyclohexyl)methane (BMACM).

Examples of copolyamides that may be mentioned include copolymers of caprolactam and lauryllactam (PA 6/12), copolymers of caprolactam, adipic acid and hexamethylenediamine (PA 6/6-6), copolymers of caprolactam, lauryllactam, adipic acid and hexamethylenediamine (PA 6/12/6-6), copolymers of caprolactam, lauryllactam, 11-aminoundecanoic acid, azelaic acid and hexamethylenediamine (PA 6/6-9/11/12), copolymers of caprolactam, lauryllactam, 11-aminoundecanoic acid, adipic acid and hexamethylenediamine (PA 6/6-6/11/12), and copolymers of lauryllactam, azelaic acid and hexamethylenediamine (PA 6-9/12).

The copolyamide is advantageously selected from PA 6/12 and PA 6/6-6. The advantage of these copolyamides is their melting point, which is lower than that of PA 6.

It is also possible to use any amorphous polyamide without a melting point.

The MFI of the polyamides and of the polyamide/polyolefin blends of the present invention is measured in accordance with the rules of the art at a temperature of from 15 to 20°C above the melting point of the polyamide. With regard to blends based on PA 6, the MFI is measured at 235°C under 2.16 kg. With regards to blends based on PA 6-6, the MFI is measured at 275°C under 1 kg.

It is also possible to use polyamide blends. The MFI of the polyamides is advantageously between 1 and 50 g/10 min.

**Regarding the polyolefin (B) of the polyamide (A)/polyolefin (B) blend** it may be functionalized or unfunctionalized or may be a blend of at least one functionalized polyolefin and/or at least one unfunctionalized polyolefin. For simplification, functionalized polyolefins have been described (B1) and unfunctionalized polyolefins (B2) below.

An unfunctionalized polyolefin (B2) is conventionally a homopolymer or copolymer of alpha-olefins or diolefins, such as, for example, ethylene, propylene, 1-butene, 1-octene and butadiene. By way of example, mention may be made of:
- the homopolymers and copolymers of polyethylene, in particular LDPE, HDPE, LLDPE (linear low density polyethylene), VLDPE (very low density polyethylene) and metallocene polyethylene.
- the homopolymers or copolymers of propylene.
- ethylene-alpha-olefin copolymers such as ethylene-propylene, EPRs (ethylene-propylene rubbers) and ethylene-propylene-diene monomer copolymers (EPDMs).
- styrene/ethylene-butene/styrene (SEBS), styrene/butadiene/styrene (SBS), styrene/isoprene/styrene (SIS) and styrene/ethylene-propylene/styrene (SEPS) block copolymers.
- the copolymers of ethylene with at least one product selected from the salts and esters of unsaturated carboxylic acids, such as alkyl (meth)acrylate (for example methyl acrylate), or vinyl esters of saturated carboxylic acids, such as vinyl acetate, it being possible for the proportion of comonomer to be up to 40% by weight.

The functionalized polyolefin (B1) can be a polymer of alpha-olefins having reactive units (the functionalities); reactive units of this kind are acid, anhydride or epoxy functions. By way of example mention may be made of the above polyolefins (B2) grafted or co- or terpolymerized with unsaturated epoxides such as glycidyl (meth)acrylate, or with carboxylic acids or the corresponding salts or esters, such as (meth)acrylic acid (which can be fully or partly neutralized by metals such as Zn, etc.) or else with anhydrides of carboxylic acids, such as maleic anhydride. A functionalized polyolefin is, for example, a PE/EPR blend whose ratio by weight can vary within wide limits, for example between 40/60 and 90/10, the said blend being cografted with an anhydride, especially maleic anhydride, in accordance with a degree of grafting of, for example, from 0.01 to 5% by weight.

The functionalized polyolefin (B1) may be selected from the following (co)polymers, grafted with maleic anhydride or glycidyl methacrylate, in which the degree of grafting is, for example, from 0.01 to 5% by weight:
- PE, PP, copolymers of ethylene with propylene, butene, hexene or octene containing for example from 35 to 80% by weight of ethylene;
- ethylene-alpha-olefin copolymers such as ethylene-propylene, EPRs (ethylene-propylene rubbers) and ethylene-propylene-diene monomer copolymers (EPDMs).
- styrene/ethylene-butene/styrene (SEBS), styrene/butadiene/styrene (SBS), styrene/isoprene/styrene (SIS) and styrene/ethylene-propylene/styrene (SEPS) block copolymers.
- ethylene-vinyl acetate (EVA) copolymers containing up to 40% by weight of vinyl acetate;
- ethylene-alkyl (meth)acrylate copolymers containing up to 40% by weight of alkyl (meth)acrylate;
- ethylene-vinyl acetate (EVA) and alkyl (meth)acrylate copolymers, containing up to 40% by weight of comonomers.

The functionalized polyolefin (B1) can also be selected from ethylene-propylene copolymers containing a major proportion of propylene which are grafted with maleic anhydride and then condensed with monoamino polyamide (or a polyamide oligomer) (products described in EP-A-0342066).

The functionalized polyolefin (B1) may also be a copolymer or terpolymer of at least one of the following units: (1) ethylene, (2) alkyl (meth)acrylate or vinyl ester of saturated carboxylic acid and (3) anhydride such as maleic anhydride or (meth)acrylic acid or epoxy such as glycidyl (meth)acrylate. By way of example of functionalized polyolefins of this last type, mention may be made of the following copolymers, in which the ethylene represents preferably at least 60% by weight and in which the termonomer (the function) represents, for example, from 0.1 to 10% by weight of the copolymer:
- ethylene-alkyl (meth)acrylate-(meth)acrylic acid or maleic anhydride or glycidyl methacrylate copolymers;
- ethylene-vinyl acetate-maleic anhydride or glycidyl methacrylate copolymers;
- ethylene-vinyl acetate or alkyl (meth)acrylate-(meth)acrylic acid or maleic anhydride or glycidyl methacrylate copolymers.

In the above copolymers, the (meth)acrylic acid can be in the form of a salt with Zn or Li.

The term "alkyl (meth)acrylate" in (B1) or (B2) denotes C1 to C8 alkyl acrylates and methacrylates and may be selected from methyl acrylate, ethyl acrylate, n-butyl acrylate, isobutyl acrylate, 2-ethylhexyl acrylate, cyclohexyl acrylate, methyl methacrylate and ethyl methacrylate.

Furthermore, the abovementioned polyolefins (B1) may also be crosslinked by any appropriate process or agent (diepoxy, diacid, peroxide, etc.); the term "functionalized polyolefin" also embraces the blends of the abovementioned polyolefins with a difunctional reagent such as diacid, dianhydride, diepoxy, etc. which is capable of reacting with the said polyolefins, or the blends of at least two functionalized polyolefins are capable of reacting with themselves.

The abovementioned copolymers, (B1) and (B2), may be copolymerized randomly or blockwise and may have a linear or branched structure.

The molecular weight, MFI and density of these polyolefins may also vary within a wide range, as the person skilled in the art will appreciate. MFI, the abbreviation for melt flow index, is the index of fluidity in the melt state. It is measured in accordance with the standard ASTM 1238.

The unfunctionalized polyolefins (B2) are advantageously selected from homopolymers or copolymers of propylene and any homopolymer of ethylene or copolymer of ethylene and a higher alpha-olefin-type comonomer such as butene, hexene, octene or 4-methyl-1-pentene. Mention may be made, for example, of PPs, high density PEs, medium density PEs, linear low density PE, low density PE and very low density PE. These polyethylenes are known by the person skilled in the art as being products of a radical process, products of Ziegler catalysis or, more recently, products of metallocene catalysis.

The functionalized polyolefins (B1) are advantageously selected from any polymer containing alpha-olefin units and units which carry polar reactive functions, such as epoxy, carboxylic acid or carboxylic anhydride functions. Examples of such polymers that may be mentioned include the terpolymers of ethylene, alkyl acrylate and maleic anhydride or glycidyl methacrylate, such as the Applicant's Lotader® products, or polyolefins grafted with maleic anhydride, such as the Applicant's Orevac® products, and also terpolymers of ethylene, alkyl acrylate and (meth)acrylic acid. Mention may also be made of the homopolymers or copolymers of polypropylene which are grafted with a carboxylic anhydride and then condensed with polyamides or monoamino polyamide oligomers.

The MFI of (A), and the MFIs of (B1) and (B2), can be selected within a wide range; however, in order to facilitate the dispersion of (B) it is recommended that the MFI of (A) be greater than that of (B).

For small proportions of (B), for example from 10 to 15 parts, it is sufficient to use an unfunctionalized polyolefin (B2). The proportion of (B2) and (B1) in the (B) phase depends on the amount of functions present in (B1) and on their reactivity. It is advantageous to use (B1)/(B2) weight ratios ranging from 5/35 to 15/25. For small proportions of (B) it is also possible to use only a mixture of polyolefins (B1) in order to obtain crosslinking.

**As far as the central layer is concerned** it may be a polyolefin layer or a polyamide layer or a polyamide/polyolefin blend layer.

This central layer can be a polyethylene homopolymer or copolymer layer, for example. These products have been described for (B2). In order to prevent the delamination of the different layers, it is recommended that a functionalized polyolefin, preferably polyethylene grafted with an unsaturated carboxylic anhydride, be added to the polyethylene of the central layer. These grafted products were described for (B1). The proportion of grafted polyethylene is advantageously from 5 to 30 parts per 95 to 70 parts of polyethylene. It is also possible to provide a coextrusion binder between the central layer and each outer layer; however, this solution leads to a 5-layer structure which is expensive to implement.

This central layer can also be a polypropylene block copolymer layer. As for the polyethylene, it is possible to add a functionalized polypropylene or functionalized polyethylene, in the same proportions, in order to prevent delamination of the different layers.

The central layer may also be a polyamide layer. In this embodiment of the invention it is unnecessary to provide a coextrusion binder between this central layer and each outer layer. The polyamide has been described above in the description of the polyamide/polyolefin blends. The polyamide is advantageously PA 6, PA 6/12 or PA 6/6-6.

The central layer may also be a polyamide/polyolefin blend layer. In this embodiment of the invention it is unnecessary to provide a coextrusion binder between this central layer and each outer layer. In this embodiment, advantageously, the polyolefin (B) comprises (i) an LLDPE, VLDPE or metallocene polyethylene and (ii) an ethylene-alkyl (meth)acrylate-maleic anhydride copolymer. The proportions are advantageously as follows (by weight):
from 60 to 70% of polyamide, advantageously PA 6, PA 6/12 or PA 6/6-6;
from 5 to 15% of an ethylene-alkyl (meth)acrylate-maleic anhydride copolymer or a polyethylene grafted with maleic anhydride;
the remainder is an LLDPE, VLDPE or metallocene polyethylene; advantageously, the density of this polyethylene is between 0.870 and 0.925 and the MFI is between 0.1 and 5 (190°C - 2.16 kg).

The ethylene-alkyl (meth)acrylate-maleic anhydride copolymers advantageously contain from 0.2 to 10% by weight of maleic anhydride and up to 40% and, preferably, from 5 to 40% by weight of alkyl (meth)acrylate. Their MFI is between 2 and 100 (190°C - 2.16 kg). The alkyl (meth)acrylates have already been described above. The melting point is between 80 and 120°C. These copolymers are commercially available. They are produced by radical polymerization at a pressure which can be between 200 and 2500 bars.

**With regard to the low surface tension outer layer** it is possible to use three kinds of materials: two types of alloy and polyamide. The first is based on PA 6 and polypropylene, has cocontinuous phases and has a surface tension very close to that of polypropylene (of the order of from 31 to 34 mJ/m²). However, it is possible to add additives to it in order to lower the surface tension to levels of between 10 and 31 mJ/m². These additives are, for example, conventional lubricants or antiblocking agents or fillers such as glass beads. The proportion of additives depends on their type and may vary within wide proportions, as the person skilled in the art will appreciate.

The second type of alloy is one having a PA 6 matrix and a polyethylene disperse phase and contains the abovementioned additives in order to lower the surface tension.

It is also possible to use polyamide. Similarly to the second type of alloy it contains the abovementioned additives in order to lower the surface tension. The polyamide has been described above in the polyamide/polyolefine blends.

**With regard to the first type of alloy of the low surface tension outer layer,** having cocontinuous phases, this term "polyamide/polyolefin alloy having cocontinuous phases" denotes products comprising a polyamide according to the conventionally accepted definition; a polyolefin, such as is described above, and, when the latter does not contain sufficient functionality to provide compatibilization with the polyamide, a compatibilizer; the polyolefin and the polyamide are present in the form of two cocontinuous phases; in other words, neither of the two phases is present in a form in which it is dispersed in the other phase. The polyolefin may be functionalized or unfunctionalized and may comprise a mixture of an unfunctionalized polyolefin and a functionalized polyolefin. This alloy is distinct from alloys having a polyamide matrix.

The polyolefin (B) comprises (i) polypropylene and (ii) a polyolefin which results from the reaction of a polyamide (C4) with a copolymer (C3) containing propylene and a grafted or copolymerized, unsaturated monomer X.

The proportions are advantageously as follows (by weight):
from 50 to 62% of polyamide, advantageously PA 6,
from 20 to 40% of polypropylene,
from 3 to 20% of a polyolefin which results from the reaction of a polyamide (C4) with a copolymer (C3) containing propylene and a grafted or copolymerized, unsaturated monomer X.

A description will now be given of the grafted product of this embodiment of the invention. First of all, (C3) is prepared, which is either a copolymer of propylene and an unsaturated monomer X or a polypropylene onto which an unsaturated monomer X is grafted. X is any unsaturated monomer which can be copolymerized with propylene or grafted onto polypropylene and possesses a function which is able to react with a polyamide. This function may be, for example, a carboxylic acid, a dicarboxylic anhydride or an epoxide. Examples of monomers X that may be mentioned include (meth)acrylic acid, maleic anhydride and unsaturated epoxides such as glycidyl (meth)acrylate. It is advantageous to use maleic anhydride. As regards grafted polypropylenes, X can be grafted onto polypropylene homopolymers or copolymers, such as ethylene-propylene copolymers containing a major proportion of propylene (in moles). Advantageously, (C3) is such that X is grafted. Grafting is an operation which is known per se.

(C4) is a polyamide or a polyamide oligomer. Polyamide oligomers are described in EP 342066 and FR 2291225. The polyamides (or oligomers) (C4) are condensation products of monomers already mentioned above. Mixtures of polyamides may be used. It is advantageous to use PA 6, PA 11, PA 12, the copolyamide having 6-units and 12-units (PA 6/12), and the copolyamide based on caprolactam, hexamethylenediamine and adipic acid (PA 6/6-6). The polyamides or oligomers (C4) may have acid, amine or monoamine end groups. For the polyamide to have a monoamine end group, it is sufficient to use a chain regulator of formula 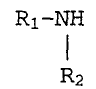 in which:
R₁ is hydrogen or a linear or branched alkyl group containing up to 20 carbon atoms and
R₂ is a linear or branched alkyl or alkenyl group having up to 20 carbon atoms, a saturated or unsaturated cycloaliphatic radical, an aromatic radical or a combination of the above. The regulator can be, for example, laurylamine or oleylamine.

(C4) is advantageously a PA 6, a PA 11 or a PA 12. The proportion of C4 in C3 + C4 by weight is advantageously between 0.1 and 60%. The reaction of (C3) with (C4) takes place preferably in the melt state. It is possible, for example, to knead (C3) and (C4) in an extruder at a temperature which is generally between 230 and 250°C. The average residence time of the melt in the extruder may be between 10 seconds and 3 minutes and, preferably, between 1 and 2 minutes.

**As regards the second type of alloy of the low surface tension outer layer**, the polyolefin (B) comprises (i) a polyethylene of LLDPE, VLDPE or metallocene type and (ii) an ethylene-alkyl (meth)acrylate-maleic anhydride copolymer. The proportions are advantageously as follows (by weight):
from 60 to 70% of polyamide, advantageously PA 6, PA 6/12, PA 6/6-6;
from 5 to 15% of an ethylene-alkyl (meth)acrylatemaleic anhydride copolymer or polyethylene grafted with maleic anhydride;
the remainder is an LLDPE, VLDPE or metallocene polyethylene; the density of this polyethylene is advantageously between 0.870 and 0.925 and the MFI is advantageously between 0.1 and 5 (190°C - 2.16 kg).

The ethylene-alkyl (meth)acrylate-maleic anhydride copolymers advantageously contain from 0.2 to 10% by weight of maleic anhydride and up to 40% and, preferably, from 5 to 40% of alkyl (meth)acrylate. Their MFI is between 2 and 100 (190°C - 2.16 kg). The alkyl (meth)acrylates have already been described above. The melting point is between 80 and 120°C. These copolymers are commercially available. They are produced by radical polymerization at a pressure which may be between 200 and 2500 bars. Of course This type of alloy contains additives to lower the surface tension.

**As regards the third type of material**, the polyamide, it has been described above. The polyamide is advantageously PA 6, PA 6/12 or PA 6/6-6. Of course it contains the additives to lower the surface tension.

**As regards the high surface tension outer layer**, use may be made of the alloy according to the second type of alloy of the low surface tension layer but without adding additives; in this case, the surface tension of the polyamide in the matrix is obtained (which is of the order of from 36 to 40 mJ/m²). In order to increase this surface tension it is possible, for example, to carry out a corona treatment; by this means, this surface tension is increased greatly to levels of the order of from 40 to 65 mJ/m².

Use may be made also of polyamide. Polyamide has been described above in the description of alloys. In order to increase the surface tension it is possible, for example, to carry out a corona treatment; by this means, the surface tension is increased greatly to levels of the order of from 40 to 65 mJ/m². The polyamide is advantageously PA 6, PA 6/12 or PA 6/6-6.

The alloys of the different layers are manufactured by mixing the components in the melt state in apparatus customary for thermoplastics. In addition to specific additives for obtaining the surface tensions indicated, the layers may comprise customary additives of alloys and of polyolefins, if appropriate, of the central layer, provided that the surface tensions are observed. These additives are, for example, UV absorbers and processing aids.

The thickness of the different layers may vary from 4 to 20 µm, but preferably the total thickness is not more than 50 µm an advantageously between 12 and 30µm. By way of example, the thicknesses (in µm) may be 4/6/4; 6/8/6; 7/8/7; 20/10/20.

The films are manufactured by the customary techniques, such as extrusion blow-moulding. The MFIs of the different layers are adapted to these techniques. The MFI of the alloys is advantageously between 1 and 5 g/10 min (190°C under 2.16 kg).

## Claims

1. Film comprising
(i) at least one central polyolefin or polyamide or polyamide/polyolefin alloy layer and
(ii) at least two outer polyamide or polyamide/polyolefin alloy layers having a surface tension of less than 34 mJ/m² for one of the faces, advantageously between 10 and 31 mJ/m², and a surface tension of greater than 36 mJ/m² for the other face, advantageously from 40 to 65 mJ/m².

2. Film according to Claim 1 in which the central layer is a polyethylene homopolymer or copolymer layer.

3. Film according to Claim 2 in which the polyethylene of the central layer comprises a functionalized polyolefin, preferably polyethylene grafted with an unsaturated carboxylic anhydride.

4. Film according to Claim 1 in which the central layer is a polypropylene block copolymer layer.

5. Film according to Claim 1 in which the central layer is a polyamide/polyolefin alloy layer comprising:
• from 60 to 70% of polyamide, advantageously PA 6, PA 6/12 or PA 6/6-6,
• from 5 to 15% of an ethylene-alkyl (meth)acrylatemaleic anhydride copolymer or a polyethylene grafted with maleic anhydride,
• the remainder consisting of LLDPE, VLDPE or metallocene polyethylene.

6. Film according to claim 1 in which the central layer is a polyamide layer.

7. Film according to any one of the preceding claims, in which the low surface tension outer layer is based on PA 6 and polypropylene and has cocontinuous phases and optionally comprises additives to lower the surface tension.

8. Film according to Claim 7 in which the alloy comprises:
• from 50 to 62% of polyamide, advantageously PA 6,
• from 20 to 40% of polypropylene,
• from 3 to 20% of a polyolefin which results from the reaction of a polyamide (C4) with a copolymer (C3) containing propylene and a grafted or copolymerized, unsaturated monomer X.

9. Film according to any one of Claims 1 to 6 in which the low surface tension outer layer comprises additives to lower this tension and is an alloy layer comprising:
• from 60 to 70% of polyamide, advantageously PA 6, PA 6/12 or PA 6/6-6,
• from 5 to 15% of an ethylene-alkyl (meth)acrylatemaleic anhydride copolymer or polyethylene grafted with maleic anhydride,
• the remainder consisting of LLDPE, VLDPE or metallocene polyethylene.

10. Film according to any one of claims 1 to 6 in which the low surface tension outer layer comprises additives to lower this tension and is a polyamide layer.

11. Film according to any one of the preceding claims, in which the high surface tension outer layer is optionally corona treated to increase its surface tension and is an alloy layer comprising:
• from 60 to 70% of polyamide, advantageously PA 6, PA 6/12 or PA 6/6-6,
• from 5 to 15% of an ethylene-alkyl (meth)acrylatemaleic anhydride copolymer or a polyethylene grafted with maleic anhydride,
• the remainder consisting of LLDPE, VLDPE or metallocene polyethylene.

12. Film according to any one of claims 1 to 10 in which the high surface tension outer layer is optionally corona treated to increase its surface tension and is a polyamide layer.

13. Film according to any of the preceding claims, in which the thickness of each layer is between 4 and 20 µm and the total thickness is not more than 50 µm.

14. Covers consisting of the film according to any one of the preceding claims, in which the low surface tension face is disposed on the inside.

15. Use of the above covers for protecting the bodies of cars during paint refinishes.

16. SMC sandwich structures consisting of a crosslinkable unsaturated polyester disposed between two films according to any one of Claims 1 to 12, the low surface tension face of these films being disposed on the polyester side.

17. Use of the films according to any one of Claims 1 to 12 for refinishing the protective system of autoclaves.

18. Use of the films according to any of Claims 1 to 12 for extruding PMMA sheets.
